(19) Europäisches Patentamt

European Patent Office

Office européen des brevets

(11) **EP 1 048 542 A2**

(12) **EUROPÄISCHE PATENTANMELDUNG**

(43) Veröffentlichungstag:
**02.11.2000 Patentblatt 2000/44**

(51) Int. Cl.$^7$: **B61C 15/04**, B60L 13/03

(21) Anmeldenummer: **00108466.4**

(22) Anmeldetag: **18.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **30.04.1999 DE 19919967**

(71) Anmelder:
**SIEMENS AKTIENGESELLSCHAFT
80333 München (DE)**

(72) Erfinder:
• **Konrad, Hilmar
  91058 Erlangen (DE)**
• **Heidt, Hans-Hermann
  91074 Herzogenaurach (DE)**

(54) **Verfahren und Vorrichtung zur Erhöhung der Normalkraft eines Schienenfahrzeugs**

(57) Zur Beherrschung von Auftriebskräften bei einem mit hoher Geschwindigkeit bewegten Schienenfahrzeug, insbesondere bei einem Hochgeschwindigkeitszug, infolge von Seitenwind- und/oder Querbeschleunigungen werden ein Verfahren und eine Vorrichtung zur Erhöhung der zwischen dem Schienenfahrzeug und der Schiene (3) wirkenden Normalkraft ($F_N$) vorgeschlagen, wobei in einem Luftspalt (19) zwischen einem vom Schienenfahrzeug mitbewegten Magnetsystem (1) und der Schiene (3) ein magnetisches Wanderfeld mit einer der Fahrzeuggeschwindigkeit ($v_F$) entgegengesetzt gleichen Wanderfeldgeschwindigkeit ($v_W$) erzeugt wird. Die vom Wanderfeld erzeugte magnetische Kraft ($F_M$) wird in Abhängigkeit von einer meßtechnisch erfassten Entlastung eines Fahrzeugrades (2) gegenüber der diesem zugeordneten Schiene (3) eingestellt.

Fig. 1

EP 1 048 542 A2

**Beschreibung**

Die Erfindung bezieht sich auf ein Verfahren zur Erhöhung der zwischen einem Schienenfahrzeug und der Schiene wirkenden Normalkraft, bei dem in einem Luftspalt zwischen einem vom Schienenfahrzeug mitbewegten Magnetsystem und der Schiene ein magnetisches Wanderfeld erzeugt wird. Sie bezieht sich weiter auf eine Vorrichtung zur Durchführung des Verfahrens. Unter Schienenfahrzeug wird hierbei ein von einer Schiene oder von zwei zueinander parallel verlaufenden Schienen geführtes Fahrzeug, insbesondere ein Hochgeschwindigkeitszug, aber auch ein Triebwagen oder Triebkopf, eine Lok, ein Güterwagen oder ein Personenwagen verstanden.

Schienenfahrzeuge, insbesondere moderne Hochgeschwindigkeitszüge, wie beispielsweise der deutsche Intercity Express (ICE), erfahren begünstigt durch böenartige Seitenwinde häufig kritische Auftriebskräfte und mechanische Momente (Rollmoment), die ein Kippen oder Entgleisen des Schienenfahrzeugs zur Folge haben können, wenn keine geeigneten Gegenmaßnahmen getroffen werden. Die Wirkung der Auftriebskräfte und mechanischen Momente hängt insbesondere von der Fahr- und Windgeschwindigkeit und von der Fahrzeugmasse sowie von den geometrischen Abmessungen der Fahrzeugkontur und von der aerodynamischen Formgebung des Buges, d.h. des führenden Steuerwagens oder Endwagens, ab. So zeigen die Profile des führenden Wagens derartiger Schienenfahrzeuge üblicherweise für auftreffende Seitenwinde die Wirkung einer Tragfläche mit der Folge, dass während der Fahrt eine Verringerung der zwischen dem Schienenfahrzeug und der Schiene wirkenden Normalkraft auftritt.

Den am Schienenfahrzeug angreifenden Auferiebskräften und Rollmomenten wirkt zunächst lediglich die Masse und damit die Gewichtskraft des Schienenfahrzeugs entgegen. Reicht diese nicht aus, muss bisher die Fahrzeuggeschwindigkeit reduziert werden, wenn keine zusätzlichen Sicherheitsmaßnahmen getroffen werden. So wurde z.B. die maximale Geschwindigkeit des ICE 2 bei Vorausfahrt mit leichtem Steuerwagen im Betriebseinsatz von 280 km/h auf 200 km/h reduziert. Bei dem ICE 3 wurde für beide Fahrtrichtungen die maximale betriebliche Geschwindigkeit von 330 km/h auf 200 km/h reduziert.

Im Hinblick auf das derzeitige Bestreben nach einer zunehmenden Reduzierung des Gewichtes und der Achslasten der Schienenfahrzeuge mit dem Ziel einer Energieeinsparung sowie einer Reduzierung der Fahrwegbeanspruchung treten die geschilderten Probleme entsprechend verstärkt auf. So tritt während der Fahrt derartiger Schienenfahrzeuge in Leichtbauweise abhängig von der Geometrie der Fahrzeug- oder Wagenkastenoberflächen und der Fahrzeuggeschwindigkeit sowie der am Fahrzeug angreifenden Windkräfte eine zunehmende Verminderung der Normalkraft und damit eine zunehmende Entlastung der Wagenaufstandskräfte, insbesondere am führenden Drehgestell oder an den führenden Radsätzen, durch aerodynamischen Auftrieb auf. Die daraus resultierende Auftriebekomponente wird mit zunehmender Fahrzeuggeschwindigkeit und mit zunehmender Windanströmung des Fahrzeugs größer.

Zusätzlich wird das vom Anströmwinkel des Windes abhängige Rollmoment um die Längsachse des Fahrzeugs vergrößert, das im Extremfall ein Kippen des Fahrzeugs zur Folge haben kann. Dieses Rollmoment wird bei Kurven- oder Bogenfahrten mit hohen Querbeschleunigungen noch begünstigt, da hier ein einseitig entlastendes Moment aufgrund der Zentrifugalkraft wirkt. Besonders gefährdet sind hierbei Doppelstockzüge aufgrund ihrer großen wirksamen seitlichen Anströmfläche und des relativ hoch liegenden Schwerpunktes. Das dem Rollmoment entgegenwirkende Rückstellmoment, das im Wesentlichen durch die mit der halben Spurweite multiplizierte Gewichtskraft gebildet ist, verringert sich bei geringen Spurweiten und begünstigt somit bei gegebener seitlicher Windkraft das Kippen des Fahrzeugs.

Ein weiteres zu beherrschendes Problem besteht im sogenannten Schlingern des nachlaufenden Endwagen des Schienenfahrzeugs oder -zuges mit zunehmender Geschwindigkeit. Dies führt bei mit Fahrgästen besetztem Endwagen zu einer deutlichen Verschlechterung des Fahrkomforts, der bei Überschreiten der zulässigen Komfortgrenzwerte zu einer Reduzierung der maximal zulässigen Fahrzeuggeschwindigkeit führt. Diese Schlingerbewegung des letzten Wagens oder Endwagens eines Zuges wird insbesondere dadurch begünstigt, dass kein weiterer nachfolgender Wagen die sich einstellende Schlingerbewegung dämpft. Die Frequenz und die Amplitude der bei der Schlingerbewegung auftretenden Querschwingungen werden mit abnehmender Fahrzeugmasse größer.

Ferner ergibt sich aufgrund geringer Beschleunigunys- und/- oder Bremskräfte bei einem geringen Reibwert $\mu$, d.h. insbesondere bei glatten Schienen, ein weiteres Problem. Dieser Reibwert oder -koeffizient $\mu$ bestimmt sowohl beim Beschleunigen als auch beim Bremsen des Schienenfahrzeugs die auf die Schiene übertragene Antriebs- bzw. Bremskraft F gemäß der Beziehung $F = \mu \times F_N$, wobei $F_N$ die am jeweiligen Aufstandspunkt, d.h. am jeweiligen Fahrzeugrad oder der jeweiligen Radanordnung, wirkende Aufstands- oder Normalkraft ist. Die Aufstands- oder Normalkraft $F_N$ ist dabei direkt abhängig von der Fahrzeugmasse - und damit der Gewichtskraft des Schienenfahrzeugs - sowie von der Anzahl der abstützenden Stellen für die Krafteinleitung über die Radsätze unter dem Fahrzeug in die Schienen. Die üblicherweise geforderte Antriebs- bzw. Bremskraft kann bei schlechten Schienenverhältnissen mit kleinem Reibkoeffizient bei gegebener Fahrzeugmasse häufig nicht realisiert werden, so dass das Schienenfahrzeug bei Beschleunigungsvorgängen schleudert bzw. bei Bremsvorgängen gleitet. Diese Effekte sind umso kritischer, je mehr die Fahrzeugmasse reduziert wird.

Um einerseits betrieblich die maximale Geschwindigkeit eines Schienenfahrzeugs, insbesondere eines Hochgeschwindigkeitszuges, zu nutzen und dabei weitestgehend betriebliche Einschränkungen an windigen Tagen auf den Fahrbetrieb zu vermeiden, wurden entlang der Schienen oder Bahntrassen kostenintensive Windwarnanlagen installiert. Damit verbunden ist eine aufwendige Erfassung der Meßwerte aller Windanlagen sowie deren sicherheitsrelevante Bewertung und deren sichere Übermittlung auf das jeweilige Schienenfahrzeug als Windwarnung zur Geschwindigkeitsreduzierung. Wesentlicher Nachteil dieses Konzepts ist es, das mit wirtschaftlich vertretbarem Aufwand eine lückenlose lokale Winderfassung praktisch nicht realisierbar ist.

Der betriebsbedingten Verminderung der zwischen dem Schienenfahrzeug und der Schiene wirkenden Normal- oder Aufstandskraft infolge von aerodynamischen und/oder durch Seitenwind begünstigten Auftriebskräfte wird bisher im Wesentlichen durch eine Erhöhung der Wagenmasse, insbesondere durch gezielte Balastrierung, und durch eine Geschwindigkeitsreduzierung sowie durch eine Änderung der Fahrzeug- oder Wagenkasten-Geometrie begegnet. Entsprechende Maßnahmen werden bisher auch zur Vermeidung von Schlingerbewegungen des nachlaufenden Endwagens sowie zur Vermeidung der Verringerung der Beschleunigungs- und/oder Bremskräfte infolge eines verringerten Reibkoeffizienten herangezogen. Zur künstlichen Erhöhung des Reibwertes wird zudem häufig eine Besandung der Schienen mittels vom Schienenfahrzeug mitgeführtem Sand durchgeführt.

Diese Maßnahmen sind jedoch äußerst unbefriedigend, zumal beispielsweise eine Erhöhung der Wagenmasse der angestrebten Leichtbauweise der Schienenfahrzeuge entgegenwirkt. Ebenso ist eine Geschwindigkeitsreduzierung äußerst unerwünscht, da stets höhere Geschwindigkeiten derartiger Schienenfahrzeuge angestrebt werden. Darüber hinaus verursachen bauliche Maßnahmen entlang des Fahrweges, z.B. Windschutzzäune und Windwarnanlagen in Form von sogenannten Nowcasting-Anlagen, entsprechend hohe Betriebskosten und Anlageninvestitionen sowie unerwünscht große ökologische Eingriffe.

Der Erfindung liegt daher die Aufgabe zugrunde, ein Verfahren der eingangs genannten Art anzugeben, das unter Vermeidung der genannten Nachteile eine besonders effektive Erhöhung der zwischen dem Schienenfahrzeug und der Schiene wirkenden Normalkraft ermöglicht. Darüber hinaus soll eine besonders geeignete Vorrichtung zur Durchführung des Verfahrens angegeben werden.

Bezüglich des Verfahrens wird diese Aufgabe erfindungsgemäß gelöst durch die Merkmale des Anspruchs 1. Dazu erfolgt eine Einstellung der vom Wanderfeld erzeugten magnetischen Kraft in Abhängigkeit von geeigneten, betriebsbedingten Steuerparametern. Dabei wird einerseits die Geschwindigkeit des magnetischen Wanderfeldes (Wanderfeldgeschwindigkeit) derart eingestellt, dass deren Betrag dem Betrag der Geschwindigkeit des Schienenfahrzeugs (Fahrzeuggeschwindigkeit) entspricht. Außerdem wird die Richtung des Wanderfeldes und damit die Richtung der Wanderfeldgeschwindigkeit entgegen der Fahrtrichtung des Schienenfahrzeugs und damit entgegen der Fahrzeuggeschwindigkeit eingestellt. Andererseits wird die vom Wanderfeld erzeugte magnetische Kraft in Abhängigkeit von einer meßtechnisch erfassten Entlastung eines Fahrzeugrades gegenüber der diesem zugeordneten Schiene eingestellt.

Unter Entlastung oder Radentlastung wird hierbei diejenige Kraft verstanden, um die die Normalkraft des Schienenfahrzeugs - d. h. die normal oder senkrecht zur von den Schienen aufgespannten Ebene verlaufende Komponente der Gewichtskraft des Schienenfahrzeugs - reduziert ist. Eine derartige Entlastung, die auch als Abnahme der Aufstandskraft des jeweiligen Fahrzeugrades auf der diesem zugeordneten Schiene bezeichnet werden kann, ist erkanntermaßen stets die praktisch zwangsläufige Folge einer auf das Schienenfahrzeug wirkenden äußeren Kraft, insbesondere von auf das Schienenfahrzeug wirkenden Querbeschleunigungen infolge von Seitenwindkräften und/oder der bei Kurvenfahrten des Schienenfahrzeugs wirkenden Zentrifugalkraft, infolge dessen sich das Schienenfahrzeug gegenüber einer Ruheposition mehr oder weniger zu einer Seite hin neigt. Mit anderen Worten: Infolge der Einwirkung einer äußeren Kraft auf das Schienenfahrzeug wird die in dessen Ruheposition und frei von äußeren Kräften herrschende maximale Normalkraft um die Entlastung verringert.

Der Erfindung liegt daher die Erkenntnis zugrunde, dass einerseits die beschriebenen Probleme sowohl bei den gewünschten hohen Fahrzeuggeschwindigkeiten als auch bei zusätzlich auftretenden böigen Seitenwinden und bei geringen Reibkoeffizienten praktisch gleichzeitig beherrschbar sind, wenn unter Vermeidung einer Erhöhung der Fahrzeugmasse und damit der Gewichtskraft des Schienenfahrzeugs die auf die Schiene wirkende Normalkraft zumindest um die jeweilige, betriebsbedingte Entlastung erhöht werden kann. Dies wiederum kann bei besonders geringer Massenerhöhung des Schienenfahrzeugs sowie in besonders effektiver Art und Weise durch eine parallel zum Normalanteil oder zur Normalkomponente der Gewichtskraft wirkende und in Abhängigkeit von der meßtechnisch erfassten Entlastung eingestellte, d. h. gesteuerte oder geregelte magnetische Kraft erreicht werden.

Hierzu eignet sich besonders ein magnetisches Wanderfeld, dessen Erzeugung z.B. aus DE 297 14 319 U1 an sich bekannt ist. Bei diesem bekannten Konzept dient der eingesetzte asynchrone Linearmotor jedoch zur Erzeugung einer Bremskraft, die eine Relativgeschwindigkeit zwischen dem Wanderfeld und dem Fahrzeug und somit einen von Null verschiedenen Schlupf, d.h. eine Mindestdifferenz zwischen Fahrzeug- und Wanderfeldgeschwindigkeit, erfordert.

Zwar ist darüber hinaus aus der US 4,236,455 ein Verfahren bekannt, bei dem mit einem derartigen magnetischen Wanderfeld die Haftkraft der oder jeder Antriebsachse eines Schienenfahrzeugs erhöht wird. Die Erzeugung der Haftkraft dient jedoch ausschließlich zur Erhöhung der Brems- und Antriebskräfte bei gegebenem Gewicht des Schienenfahrzeugs innerhalb zulässiger Grenzen. Hierbei wird die Wanderfeldgeschwindigkeit derart in Abhängigkeit von der Fahrzeuggeschwindigkeit eingestellt, dass stets zusätzlich zur Normalkomponente der magnetischen Kraft des Wanderfeldes auch eine Kraftkomponente in oder entgegen der Fahrtrichtung des Schienenfahrzeugs zu Antriebs- bzw. Bremszwecken erzeugt wird. Die Einstellung der Normalkraftkomponente des magnetischen Wanderfeldes erfolgt dabei unabhängig von der jeweiligen betriebsbedingten Entlastung des Schienenfahrzeugs infolge von auf dieses wirkenden äußeren Kräften.

Aufbauend auf diesem Konzept geht die Erfindung von der Überlegung aus, dass ein magnetisches Wanderfeld, das sich relativ zur Fahrzeuggeschwindigkeit mit der gleichen, jedoch entgegengerichteten Geschwindigkeit und somit synchron mit dem Schienenfahrzeug bewegt, eine magnetische Kraft mit lediglich einer Kraftkomponente normal oder senkrecht zur Schienenebene erzeugt. Dadurch entsteht ein quasi stationäres Magnetfeld im Luftspalt zwischen der Schiene und den Polen des vom Schienenfahrzeug mitgeführten und das magnetische Wanderfeld erzeugenden Magnetsystems. Wird daher durch eine geeignete Steuerung die magnetische Kraft des Wanderfelds derart in Abhängigkeit von der Rad- oder Fahrzeugentlastung gegenüber der Schiene eingestellt, dass der Schlupf des Wanderfeldes stets gleich Null ist, so wird ohne bremsend oder beschleunigend auf das Schienenfahrzeug wirkende magnetische Kraftkomponente in besonders effektiver Weise lediglich die Normalkraft des Schienenfahrzeugs erhöht.

Die daraus resultierende magnetische Kraftkomponente addiert sich somit quasi statisch zur Gewichtskraft, wenn die Relativgeschwindigkeit des im Luftspalt zwischen einem vom Schienenfahrzeug mitbewegten Magnetsystems und der Schiene erzeugten magnetischen Wanderfeldes praktisch gleich Null ist. Die sich zur Gewichtskraft addierende magnetische Kraft wird dann bei geeigneter Anordnung der das Wanderfeld erzeugenden Magnetanordnung über die jeweiligen Fahrzeugräder oder Radsätze beim sich bewegenden Schienenfahrzeug am jeweiligen Ort der Schiene in diese eingeleitet. Die vom Schienenfahrzeug mitgeführte und in Abhängigkeit von sowohl der Fahrzeuggeschwindigkeit als auch der jeweiligen Entlastung gesteuerte oder geregelte Magnetanordnung stellt somit quasi eine steuerbare „magnetische Schienenklammer oder -kralle" dar, über die das Schienenfahrzeug auch bei auf dieses wirkenden äußeren Kräften unter Kompensation der dadurch bedingten Entlastung auf oder gegen die Schiene gedrückt wird. Die steuerbare magnetische Schienenklammer wirkt dabei berührungslos, d.h. ohne mechanischen Schienenkontakt.

Die Entlastung wird zweckmäßigerweise durch eine Kraft- und/- oder Wegmessung erfasst. Dabei erfolgt die Kraftmessung vorzugsweise möglichst nahe am Aufstandspunkt des oder jedes Fahrzeugrades auf der jeweiligen Schiene. Hierzu eignet sich insbesondere ein am jeweiligen Fahrzeugrad angebrachter Dehnungsmessstreifen und/oder eine Kraftmessdose, die zweckmäßigerweise auf der der Schiene abgewandten Oberseite des Radlagers zwischen diesem und einer dort üblicherweise vorgesehenen Primärfeder angeordnet ist. Die Wegmessung kann optisch oder akustisch erfolgen. Dabei wird zweckmäßigerweise eine Weg- oder Hähenänderung zwischen einem die Räder oder Radanordnungen eines derartigen Schienenfahrzeugs aufnehmenden Drehgestellrahmen oder einer Wagenkastenunterkante und der Schiene meßtechnisch erfasst.

Als Parameter zur Einstellung der durch das Wanderfeld erzeugten magnetischen Kraft kann zweckmäßigerweise auch der Betrag des üblicherweise auf einem derartigen Schienenfahrzeug erfassten Schlupfes zwischen dem oder jedem Fahrzeugrad und der Schiene herangezogen werden. Der durch entsprechende Sensoren an den Radsätzen oder Fahrgestellen (Drehgestellen) derartiger Schienenfahrzeuge üblicherweise bereits erfasste Schlupf signalisiert einerseits bei Beschleunigungsvorgängen infolge einer Grenzwertüberschreitung die Gefahr eines Schleuderns bzw. bei Bremsvorgängen die Gefahr eines Gleitens. Bisher eingesetzte Antriebs- und Bremssteuergeräte, die diesen Schlupf erfassen, können daher bevorzugt zur Einstellung oder Steuerung der vom Wanderfeld erzeugten magnetischen Kraft herangezogen werden. Da unabhängig von der Richtung des Schlupfes, d.h. unabhängig vom Traktions- oder Bremsmodus des Steuergerätes, bei einer Grenzwertüberschreitung die magnetische Kraft erhöht wird, ist der Betrag des Schlupfes der relevante Steuerparameter für die magnetische Kraft.

Bezüglich der Vorrichtung wird die genannte Aufgabe erfindungsgemäß gelöst durch die Merkmale des Anspruchs 4. Vorteilhafte Ausgestaltungen und Weiterbildungen sind Gegenstand der auf diesen rückbezogenen Unteransprüche.

Die Vorrichtung umfasst im Wesentlichen ein vom Fahrzeug mitbewegtes und mit diesem fest verbundenes steuerbares Magnetsystem und eine Steuereinrichtung zur Einstellung der vom Wanderfeld erzeugten magnetischen Kraft anhand der Fahrzeuggeschwindigkeit und mindestens eines die Entlastung eines Fahrzeugrades gegenüber der diesem zugeordneten Schiene repräsentierenden Steuerparameters.

Als steuerbares Magnetsystem ist vorzugsweise ein synchron betriebener Linearmotor eingesetzt, der oberhalb der Schiene ein quasi statisches Wanderfeld mit einer normal zur Schiene wirkenden magnetischen Kraft erzeugt. Der Linearmotor umfaßt unter Spaltbildung zur Schiene am Schienenfahrzeug, insbesondere im Bereich der Radsätze oder an den sogenannten Drehgestellen, befestigte sowie zweckmäßigerweise einzeln erregbare und somit einzeln ansteuerbare Elektromagneten.

Alternativ kann die steuerbare Magnetanordnung aus einer Anzahl von in einer Endlosschleife mit alternierender Polung rotatorisch bewegten Permanentmagneten nach Art einer magnetischen Raupe aufgebaut sein. Eine gleichartige Wirkung wird auch durch in Schienenlängsrichtung hintereinander angeordnete zylinderförmige Permanentmagneten erzielt, die bezüglich der Zylinderachse quer zur Schiene verlaufen und jeweils in der Zylinderachse rotatorisch gelagert sind, und die gemeinsam in der Weise um die Rotationsachsen gedreht werden, dass sich ein Wanderfeld entgegen der Fahrzeugrichtung und mit der Fahrzeuggeschwindigkeit ausbildet.

In der bevorzugten Ausführungsform mit einzeln erregbaren Elektromagneten werden deren Spulen von einem Umrichter oder von mehreren Umrichtern gespeist. Der durch die Elektromagneten gebildete Linearmotor, der das magnetische Wanderfeld erzeugt, ist zweckmäßigerweise mehrphasig, insbesondere dreiphasig, aufgebaut. Dementsprechend wird zur Speisung der Spulen der Elektromagneten vorteilhafterweise ein einzelner, mehrphasiger Umrichter eingesetzt, dessen Phasenausgänge mit den jeweiligen Phasenspulen verbunden sind.

Die Spulenanordnung ist vorzugsweise mehrfach ausgeführt. Dazu sind Spulengruppen mit jeweils einer der Phasenzahl entsprechenden Anzahl von Spulen gebildet, die in Reihen- oder Parallelschaltung mit den Phasenausgängen des Umrichters verbunden sind.

Bei der üblichen Ausführung des Schienenfahrzeugs für ein Zwei-Schienen-System mit jeweils mindestens einen Radsatz aufweisenden Drehgestellen ist beidseitig des oder jedes Drehgestells eine aus einer mehrphasigen Spulenanordnung und einem mechanischen Tragsystem aufgebaute Linearmotor-Wirkgruppe vorgesehen. Diese ist unter Bildung eines Luftspaltes zwischen den Spulen und der jeweiligen Schiene am Drehgestell befestigt. Dabei dient das Tragsystem zur Übertragung der Reaktionskräfte über das Schienenfahrzeug, d.h. über das Drehgestell, auf die jeweilige Schiene. Diese bildet dabei den die magnetischen Kreise der Elektromagneten schließenden magnetischen Rückschluss und damit das Reaktionsteil des Linearmotors.

Auch ist eine Anordnung des oder jedes Linearmotors an einer anderen Stelle des Schienenfahrzeugs möglich, beispielsweise in der Mitte des oder jedes Drehgestells oder in der Wagenmitte zwischen zwei Drehgestellen. Das erforderliche Rückschlusselement ist dann beispielsweise durch zwischen den Schienen angeordnete Metallplatten oder ein dort verlegtes Metallband realisiert.

Die Steuereinrichtung dient zur Einstellung einerseits der Geschwindigkeit des Wanderfeldes und andererseits der von diesem erzeugten magnetischen Kraft in Abhängigkeit einer durch Kraft- und/oder Wegmessung erfassten Entlastung des oder jedes Fahrzeugrades, z. B. anhand eines Vergleichs der Entlastungen gegenüberliegender Fahrzeugräder. Die Steuereinrichtung ist zweckmäßigerweise ausgangsseitig mit einem Steuereingang des Umrichters verbunden. Die Steuerung des Umrichters und somit über diesen die Ansteuerung der Spulen des Linearmotors erfolgt in Abhängigkeit von der Fahrzeuggeschwindigkeit und der jeweiligen betriebsbedingten Entlastung, d. h. der Abnahme der Aufstandskraft des Schienenfahrzeugs auf der Schiene bei Einwirkung einer äußeren Kraft auf das Schienenfahrzeug.

Die Generierung relevanter Steuerparameter für das Magnetsystem mittels der Steuereinrichtung zur Kompensation der jeweiligen Entlastung der oder jeder Radanordnung durch die magnetische Kraft des Wanderfeldes und damit zur gesteuerten oder geregelten Erhöhung der Normalkraft erfolgt durch meßtechnische Erfassung beispielsweise einer Be- oder Entlastung üblicherweise vorgesehener Sekundärfedern des jeweiligen Radsatzes oder Fahr- bzw. Drehgestelles, einer Druckmessung an den Sekundärfedern, einer Neigungsmessung des Drehgestells bzw. von Fahrzeugaufbauten oder einer Erfassung der Querbeschleunigung des Schienenfahrzeugs. Außerdem kann der Betrag des Schlupfes zwischen dem oder jedem Fahrzeugrad und der Schiene als Steuerparameter herangezogen werden. Ferner kann mittels an dem oder jedem Fahrzeugrad angebrachten Dehnungsmeßstreifen die infolge einer Entlastung verminderte Normal- oder Aufstandskraft des jeweiligen Rades auf der Schiene erfasst und damit die zur Kompensation der entsprechenden Entlastung erforderliche magnetische Kraft des Wanderfeldes eingestellt werden. Auch können durch optische oder akustische Sensoren am Drehgestellrahmen oder an einem Wagenkasten durch die Entlastung bedingte Wegänderungen gegenüber der Schiene gemessen werden.

Das von den entsprechend angesteuerten Spulen der Elektromagneten und damit vom Linearmotor erzeugte magnetische Wanderfeld breitet sich entgegen der Bewegungsrichtung des Fahrzeugs und mit der Fahrzeuggeschwindigkeit aus. Die sich über die Schienen und dabei in deren Längsrichtung schließenden Feldlinien erzeugen die magnetische Kraft, deren Betrag durch die Stärke des über die Spulen geführten Stromes einerseits und durch den Abstand zwischen den Spulen und der Schiene, d.h. über die Breite des Luftspalts, andererseits eingestellt werden kann. Die Breite des Luftspalts wiederum wird vorzugsweise durch Senken und Abheben der Spulen in Richtung auf die bzw. von der Schiene eingestellt.

Die mit der Erfindung erzielten Vorteile bestehen insbesondere darin, dass durch Einstellung der magnetischen Kraft eines von einem Schienenfahrzeug mitbewegten magnetischen Wanderfeldes in Abhängigkeit von der betriebsbedingten Entlastung eine bedarfsabhängig steuerbare Aufstands- oder Normalkrafterhöhung des Schienenfahrzeugs auf die Schiene und damit eine Erhöhung der Betriebssicherheit, insbesondere bei hohen Fahrzeuggeschwindigkeiten, erreicht wird. Es ist dabei ein besonders funktionales Magnetsystem bereitgestellt, das zur Vergrößerung der Widerstands- oder Rückstellmomente des Schienenfahrzeugs bei angreifenden Seitenwindkräften und Auftriebskrätten einsetzbar ist.

Darüber hinaus ist mit diesem Magnetsystem eine Laufstabilisierung, insbesondere für den nachlauf enden Endwagen, des Schienenfahrzeugs durch die magnetischen Symmetrierungs- und Zentrierungseigenschaften des gesteuerten Wanderfeldes oberhalb der Schiene erreichbar. Ferner sind durch die Erhöhung der Normalkraft bei gegebenem Reibkoeffizienten vergleichsweise große Antriebs- und/oder Bremskräfte zwischen Fahrzeugrad und Schiene übertragbar, so dass ein Gleiten bzw. ein Schleudern des Schienenfahrzeugs oder dessen Wagen vermieden oder zumindest reduziert ist.

Nachfolgend werden Ausführungsbeispiele der Erfindung anhand einer Zeichnung näher erläutert. Darin zeigen:

FIG 1     schematisch ein steuerbares Magnetsystem (magnetische Schienenklammer) in Form eines Linearmotors zur Normalkrafterhöhung eines Schienenfahrzeugs,

FIG 2     eine bevorzugte elektrische Verschaltung einer aus Einzelspulen aufgebauten Elektromagnet-Anordnung mehrerer Linearmotoren des Magnetsystems,

FIG 3     in Draufsicht ein Drehgestell mit zwischen dessen Rädern symmetrisch angeordneter Spulenanordnung gemäß FIG 2,

FIG 4     in einer Darstellung gemäß FIG 3 ein Drehgestell mit mittig angeordnetem Linearmotor,

FIG 5     die Spulenanordnung gemäß FIG 3 oder 4 in Seitenansicht,

FIG 6     zu unterschiedlichen Zeitpunkten ein sich zwischen dem Magnetsystem und einer Schiene ausbildendes magnetisches Wanderfeld sowie die zugehörigen Phasenströme in einem Amplituden-Zeit-Diagramm,

FIG 7     die Kräfteverhältnisse infolge eines aktivierten Magnetsystems anhand einer Voreransicht eines Schienenfahrzeugs mit geneigtem Wagenkasten,

FIG 8     schematisch eine Kraftmessung mittels eines an einem Fahrzeugrad angebrachten Dehnungsmessstreifen zur Einstellung der magnetischen Kraft des Wanderfeldes bei entlastetem (rechte Figurenhälfte) bzw. nicht entlastetem (linke Figurenhälfte) Fahrzeugrad,

FIG 9     in einer Darstellung gemäß FIG 8 eine Kraftmessung mittels einer zwischen einem Achslager und einer Primärfeder angeordneten Kraftmessdose, und

FIG 10     in einer Darstellung gemäß den Figuren 8 und 9 eine Wegmessung zur Einstellung der magnetischen Kraft des Wanderfeldes.

Einander entsprechende Teile sind in allen Figuren mit den gleichen Bezugszeichen versehen.

Das steuerbare Magnetsystem 1 ist Teil eines sich mit der Geschwindigkeit $v_F$ bewegenden Schienenfahrzeugs, dessen Fahrzeugräder oder Radsätze 2 von einer Fahrschiene 3 eines Rad-Schienen-Systems geführt sind. Das steuerbare Magnetsystem 1 umfasst einen aus einer Anzahl von Elektromagneten aufgebauten synchron betriebenen Linearmotor 4, dessen Spulen 5 über jeweils einen Phasenleiter 6 an einen Phasenausgang 7a bis 7c eines Drei-Phasen-Umrichters 8 angeschlossen und somit mit diesem wechselstromseitig verbunden sind. Gleichstromseitig ist der Umrichter 8 mit der Gleichstromseite eines Hilfsbetriebe-Umrichters 9 verbunden, dessen Wechselstromseite über einen Transformator 10 an einen Stromabnehmer 11 des Schienenfahrzeugs angeschlossen ist. Die Verbindung zwischen dem Umrichter 8 und dem Hilfsbetriebe-Umrichter 9 ist z.B. eine im Schienenfahrzeug vorgesehene Zugsammelschiene für eine Gleichspannung $U_{DC}$ von etwa 670 V. Der Umrichter 8 weist einen Steuereingang 12 auf, an den eine Steuereinrichtung 13 über eine Steuerleitung 14 ausgangsseitig angeschlossen ist.

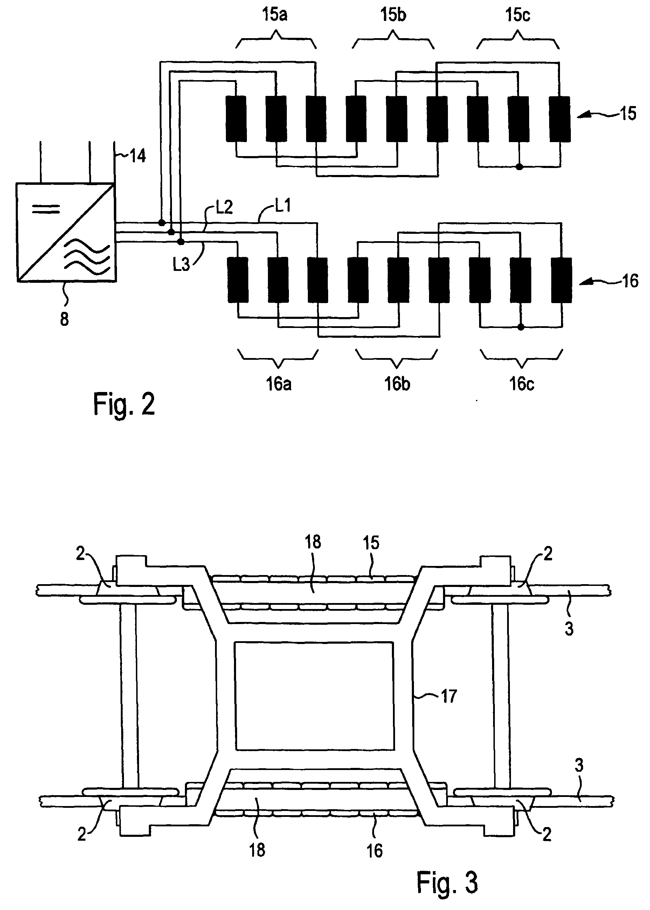

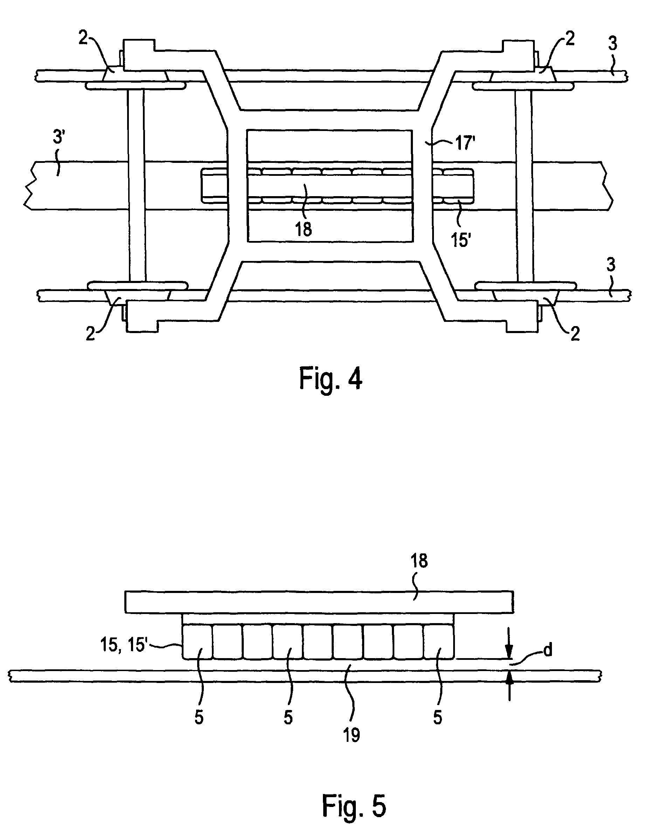

Wie in FIG 2 dargestellt, ist das steuerbare Magnetsystem 1 zweckmäßigerweise aus zwei zueinander parallel geschalteten Spulenanordnungen 15,16 mit jeweils neun Einzelspulen 5 aufgebaut. Jeweils drei Einzelspulen 5 jeder Spulenanordnung 15, 16 bilden eine Spulengruppen 15a bis 15c bzw. 16a bis 16c, deren Spulen 5 an die drei Phasenausgänge 7a bis 7c angeschlossen und dabei insgesamt parallel geschaltet sind. Die Spulen 5 der Spulengruppen 15a bis 15c und 16a bis 16c sind - wie aus FIG 5 ersichtlich - direkt nebeneinander angeordnete Zylinderspulen mit gleichem oder gleichartigem Wicklungssinn.

Die Anordnung der Spulengruppen 15a bis 15c und 16a bis 16c erfolgt beidseitig an einem Fahr- oder Drehgestell 17 des Schienenfahrzeugs zwischen den Rädern oder Radsätzen 2 und direkt oberhalb der jeweiligen Schiene 3 des in FIG 3 dargestellten Zwei-Schienen-Systems. Die Positionierung einer einzelnen Spulenanordnung 15' eines Linearmotors 4 in der Mitte des Fahr- oder Drehgestells 17' und oberhalb eines Reaktionsoder Rückschlusselements 3' in Form z.B. eines zwischen den (nicht dargestellen) Schienen verlegten Metallbandes zeigt FIG 4. Die Halterung der Spulen 5 und damit der sich in Schienenlängsrichtung erstreckenden Spulenanordnungen 15,16 erfolgt über ein entsprechendes Tragsystem 18, das gemäß FIG 3 am Drehgestell 17 zwischen den Radsätzen 2 und gemäß FIG 4 in der Mitte des Drehgestells 17 an diesem befestigt ist.

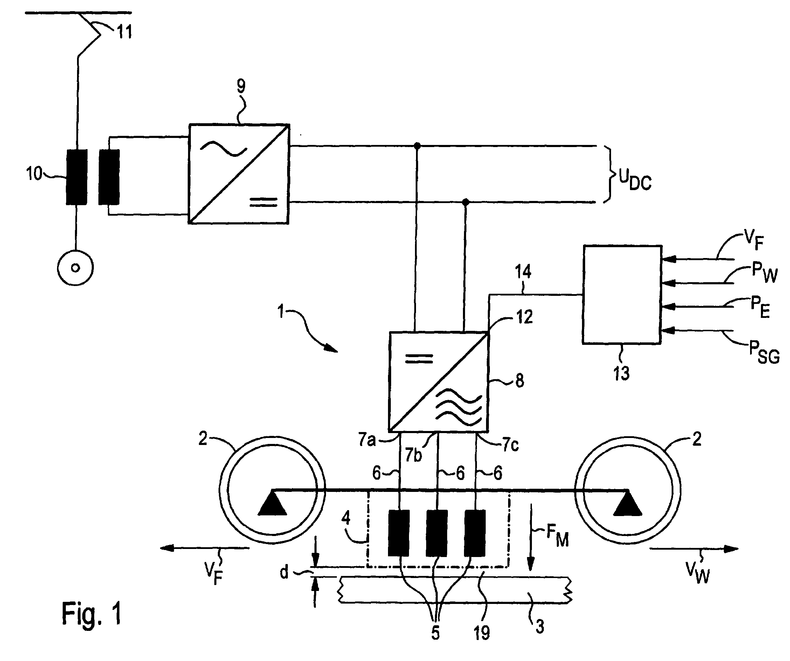

Wie aus den Figuren 1 sowie 5 und 6 ersichtlich ist, ist zwischen der jeweiligen Spulenanordnung 15, 16 sowie 15' nach den Figuren 3 bzw. 4 und damit zwischen den Elektromagneten des jeweiligen Linearmotors 4 der steuerbaren Magnetanordnung 1 und der Schiene 3 ein Luftspalt 19 mit einer Spaltbreite d gebildet, der in nicht näher dargestellter Art und Weise durch Anheben bzw. Absenken der Spulenanordnungen 15,16 oder 15' einstellbar ist.

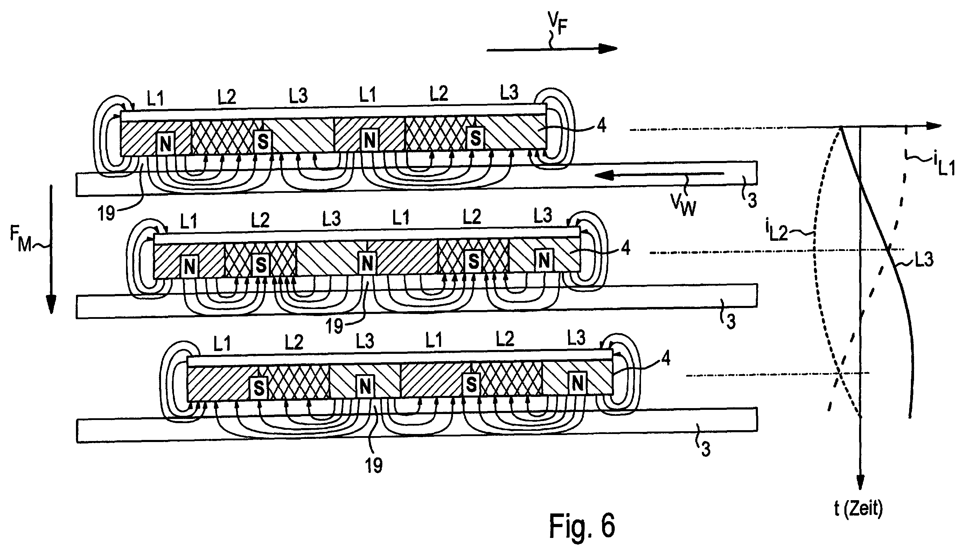

Beim Betrieb des steuerbaren Magnetsystems 1 erzeugen die über die Phasenleiter 6 vom Umrichter 8 einzeln gespeisten Spulen 5 und somit die Elektromagneten des Linearmotors 4 in dem Luftspalt 19 zwischen den Spulen 5 und der jeweiligen, als Rückschlussanker oder Rückschlusselement wirkenden Fahrschiene 3 ein magnetisches Wanderfeld, das sich mit einer der Fahrzeuggeschwindigkeit $v_F$ entgegengerichteten Wanderfeldgeschwindigkeit $v_w$ bewegt. Hierzu erhält die Steuereinrichtung 13 eingangsseitig die Fahrzeuggeschwindigkeit $v_F$ als Steuerparameter. Außerdem werden von der Steuereinrichtung 13 die Phasenströme L1 bis L3 in den jeweiligen Spulen 5 derart eingestellt, dass die Wanderfeldgeschwindigkeit $v_W$ betragsmäßig gleich der Fahrzeuggeschwindigkeit $v_F$ ist. Durch diese Einstellung der Wanderfeldgeschwindigkeit $V_W$ entgegengesetzt gleich der Fahrzeuggeschwindigkeit $v_F$ bildet sich im Luftspalt 19 ein magnetisches Wanderfeld oder Wander-Drehfeld aus, das eine magnetische Kraft $F_M$ senkrecht oder normal zur Schiene 3 erzeugt. Dies und die dazu mittels der Steuereinrichtung 13 eingestellten Phasenströme $I_{Ln}$, mit n = 1,2,3, sind in FIG 6 Veranschaulicht.

Aus der Darstellung nach FIG 6 ist erkennbar, dass infolge des synchronen Betriebs des Linearmotors 4 bei der entsprechenden Verschaltung der Elektromagneten oder Spulen 5 und der entsprechenden Steuerung der einzelnen Wirk- oder Phasenströme $I_{Ln}$ das magnetische Wanderfeld zwischen dem Linearmotor 4 und der Schiene 3 quasi statisch ist. Vergleichbar einer magnetischen Raupe wird der jeweilige magnetische Nord-Pol N oder Süd-Pol S während der Bewegung des steuerbaren Magnetsystems 1 über die Schiene 3 räumlich bezüglich der Schiene 3 quasi festgehalten. Hierdurch entstehen keine wesentlichen beschleunigenden oder bremsenden Kräfte, wie diese bei einem Linearmotor im Antriebs- bzw. Bremsbetrieb erzeugt werden. Daher entstehen keine geschwindigkeitsabhängigen Bremskräfte durch Wirbelstromeffekte, wie diese bei einer Wirbelstrombremse auftreten. Bei dem durch das steuerbare Magnetsystem 1 mit dem Linearmotor 4 und der Schiene 3 gebildeten magnetischen Kreis schließen die sich vom jeweiligen Nord-Pol N ausgehenden magnetischen Feldlinien über den Luftspalt 19 und die Schiene 3 im benachbarten Süd-Pol S am gleichen Ort der Schiene 3, da die Wanderfeldgeschwindigkeit $v_W$ gleich der Fahrzeuggeschwindigkeit $v_F$ des sich entgegen der Wanderfeldrichtung bewegenden Schienenfahrzeug ist. Die Nord-Süd-Nord-Süd-Pol-Anordnung rollt somit quasi über der Schiene 3 mit der Fahrzeuggeschwindigkeit $V_F$ ab.

Die Steuerung der einzelnen, Vorzugsweise an mehreren oder allen Drehgestellen 17 des Schienenfahrzeugs vorgesehenen Magnetsysteme 1 mittels der Steuereinrichtung 13 kann je nach Problemstellung nach unterschiedlichen Strategien oder Verfahren auch geregelt erfolgen. So kann beispielsweise zur Beherrschung aerodynamischer Auftriebskräfte eine Aktivierung des Magnetsystems 1 ortsbezogen, d.h. an bestimmten windgefährdeten Streckenabschnitten, gezielt erfolgen. Derartige Streckenabschnitte sind beispielsweise Tunnelausfahrten und Brücken. Eine Windmessung zur Beherrschung zusätzlich auftretender Seitenwindkräfte ist dann nicht erforderlich. Durch Absenken des oder jedes Linearmotors 4 in Richtung auf die als Reaktionselement wirkende Schiene 3 bzw. auf das Reaktionselement 3' nach FIG 4 und/oder durch entsprechende Einstellung der Phasenströme $I_{LN}$ wird eine entsprechend große magnetische Kraft $F_M$ normal zur Schiene 3 bzw. zum Reaktionselement 3' erzeugt, die sich zur Gewichtskraft $F_G$, d.h. zu dessen Normalkomponente, des Schienenfahrzeugs hinzu addiert.

Alternativ kann durch externe Windgeschwindigkeitserfassung die Aktivierung des oder jedes steuerbaren Magnetsystems 1 abhängig von regional bestimmten Windgeschwindigkeiten und nach deren Übertragung auf das Schienenfahrzeug, z.B. auf das vorhandene Zugsicherungssystem, erfolgen. Der Steuereinrichtung 13 wird dann ein entsprechender Steuerparameter $P_W$ für die Windgeschwindigkeit zugeführt. Auch kann eine räumlich und zeitlich aufgelöste Windgeschwindigkeitserfassung mittels des sogenannten Nowcasting-Systems bedarfsselektiv erfolgen.

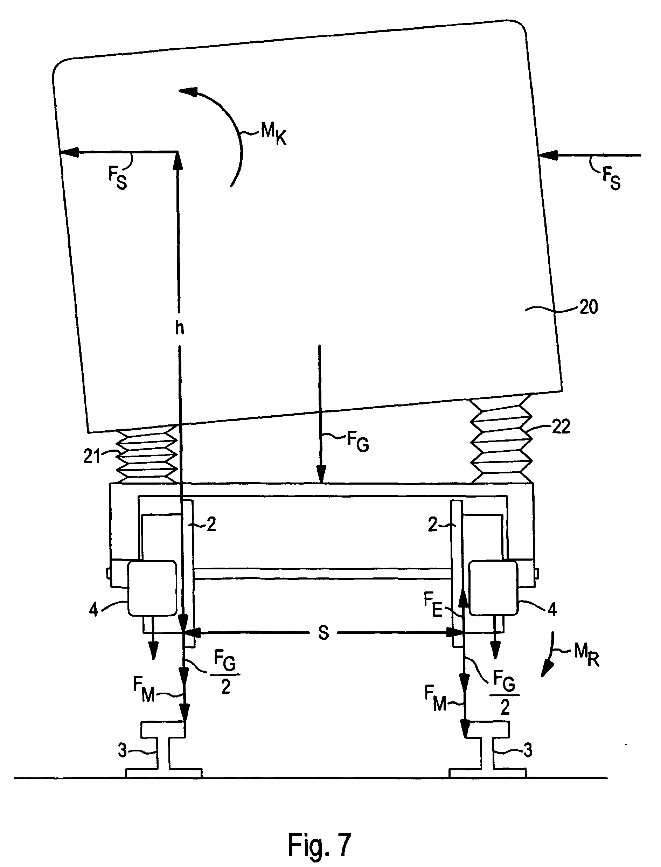

Zusätzlich erfolgt eine Entlastungserfassung zur Bestimmung der Radentlastung, d. h. der betriebsbedingten Abnahme der Aufstandskraft $F_A$ des Rades oder Radsatzes 2 auf der jeweiligen Schiene 3 (Figuren 7 bis 10). Diese Entlastungserfassung kann anhand einer Kraftmessung und/oder einer Wegmessung erfolgen, indem z. B. die Be- und/oder Entlastung eines in FIG 7 dargestellten Wagenkastens 20 anhand des Ausfederns von beidseitig des Wagenkastens 20 oberhalb der Räder 2 vorgesehene Sekundärfedern 21 und 22 ermittelt wird. Für eine Steuerung der vom Wanderfeld zu erzeugenden magnetischen Kraft $F_M$ kann die Wagenkastenentlastung und/oder -neigung gemessen und der Steuereinrichtung 13 als Maß für die Entlastung als Steuerparameter $P_E$ zugeführt werden.

Dieses Ausfedern, insbesondere des führenden Entwagens des Schienenfahrzeugs, wird durch Ausmessen der Ausdehnungsamplituden der linken und rechten Sekundärfeder 21 bzw. 22 ermittelt, wobei bei Überschreiten eines vorgegebenen Grenzwerts der gemessenen Ausdehnungsamplituden eine Aktivierung des Magnetsystems 1 mit entsprechender Einstellung der erzeugten magnetischen Kraft $F_M$ erfolgt. Der Ausdehnungs-Grenzwert stellt dabei ein Maß für die zulässige Be- oder Entlastung des Wagenkastens 20 dar. In gleicher Weise kann die Differenz der Ausdehnungsamplituden gebildet werden, die dann ein Maß für die Wagenkastenneigung darstellt. Die Wagenkastenneigung kann auch direkt, z.B. mittels eines Neigungssensors, erfaßt werden.

Eine Aktivierung des Magnetsystems 1 und die Einstellung der magnetischen Kraft $F_M$ kann bei pneumatisch betriebenen Sekundärfedern 21,22 auch über eine Druckmessung erfolgen, wobei dann der Druckabfall in den beiden Sekundärfedern 21,22 als Maß für die Entlastung und somit als Steuerparameter $P_E$ der Steuereinrichtung 13 zugeführt wird.

Eine weitere Alternative besteht darin, die Querbeschleunigung des Schienenfahrzeugs zu erfassen. Eine bei Kurvenfahrten üblicherweise auftretende unausgeglichene Querbeschleunigungen bis ca. 1,2 m/s² führt zu einer einseitigen Radsatzentlastung, die bei gleichgerichteter Wirkung des Seitenwindes, der mit einer Windkraft $F_S$ am Wagenkasten 20 angreift, entsprechend verstärkt wird. Die Querbeschleunigung kann in nicht näher dargestellter Art und Weise mittels eines Beschleunigungssensors erfaßt werden, wobei bei Erreichen eines Grenzwertes das Magnetsystem 1 aktiviert wird. Die Bestimmung des Grenzwertes zur Aktivierung des Magnetsystems 1 erfolgt zweckmäßigerweise derart, dass ein kritischer Grenzwert von z.B. 10% der Aufstands- oder Normalkraft $F_N$ des Schienenfahrzeugs nicht erreicht wird.

Zur Vermeidung eines Schlingerns des nachlauf enden Endwagens des Schienenfahrzeugs wird vorzugsweise ein am Endwagen vorgesehenes Magnetsystem 1 abhängig vom Beladungszustand und von der Fahrzeuggeschwindigkeit $v_F$ sowie ggf. in Abhängigkeit von dem gemessenen Querbeschleunigungswert eingeschaltet. Die von diesem Magnetsystem 1 erzeugte magnetische Kraft $F_M$ bewirkt somit wiederum eine Erhöhung der Normalkraft $F_N$ im Bereich des Endwagens und wirkt somit dämpfend auf derartige Schlingerbewegungen.

Das steuerbare Magnetsystem 1 wird auch dann aktiviert, wenn infolge eines geringen Reibwertes µ entsprechend geringe Beschleunigungs- oder Bremskräfte auftreten. Dadurch kann ein Schleudern oder Gleiten zwischen den Rädern 2 und den Schienen 3 bei Beschleunigungs- bzw. Bremsvorgängen sicher verhindert werden. Da auf einem derartigen Schienenfahrzeug üblicherweise ein Anfahr- und Bremssteuergerät zur Erfassung von Schleuder- bzw. Gleitbewegungen bereits vorhanden ist, werden von diesem erfasste Messwerte als Steuerparameter $P_{SG}$ der Steuereinrichtung 13 zugeführt.

Da das steuerbare Magnetsystem 1 ein quasi statisches Wanderfeld erzeugt und somit einerseits berührungslos wirkt und andererseits keine Antriebs- oder Bremskräfte erzeugt, kann dieses auch dauerhaft aktiviert sein. Die dem Betrag der jeweiligen Entlastung entsprechende, erforderliche Erhöhung der Normalkraft $F_N$ wird dann über den Betrag der magnetischen Kraft $F_M$ mit $F_N = F_M + F_G$ eingestellt.

Die Erhöhung der Normalkraft $F_N$ durch die senkrecht oder normal zur Schiene 3 wirkende magnetische Anziehungskraft $F_M$ des Magnetsystems 1 ist in FIG 7 dargestellt, die zudem die einseitige Vergrößerung der Auslenkungsamplitude der hier beispielhaft als pneumatische Feder ausgebildeten rechten Sekundärfeder 22 zeigt. Zur besseren Übersicht sind die Räder 2 des Wagenkastens 20 von den Schienen 3 abgehoben dargestellt.

Wie anhand der Kraftpfeile dargestellt, addieren sich die Anteile $F_G/2$ der Gewichtskraft $F_G$ vektoriell zur auf die jeweilige Schiene 3 wirkenden magnetischen Kraft $F_M$. Dabei wird eine Vergrößerung des Rückstellmoments $M_R$ durch die Vergrößerung der Normalkraft $F_N$ infolge der magnetischen Anziehungskraft $F_M$ erzielt, indem sich die senkrecht auf die jeweilige Schiene 3 wirkende magnetische Kraft $F_M$ gemäß der Beziehung $M_R = F_N \times s = (F_G/2 + F_M) \times s$ vektoriell zu der anteiligen Gewichtskraft $F_G/2$ im jeweiligen Auf standspunkt zwischen dem Rad 2 und der Schiene 3 addiert. Für die Spurweite s zwischen den Rädern 2 als Hebellänge ergibt sich somit ein dem Kippmoment $M_K = F_S \times h$ des in der Höhe h mit der Kraft Fs angreifenden Seitenwindes entgegengerichtetes stabilisierendes Rückstellmoment $M_R$.

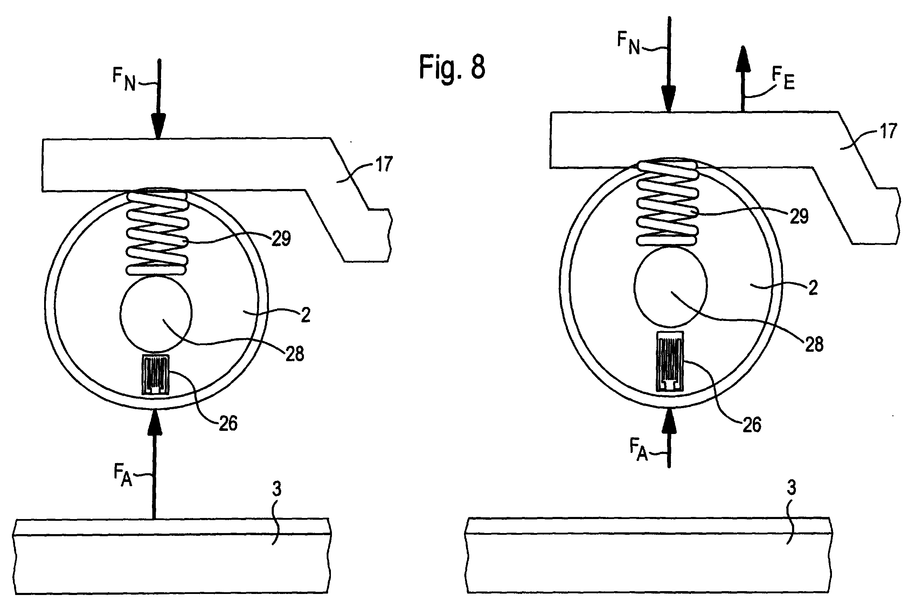

In FIG 8 ist die Abnahme der Normalkraft $F_N$ des Schienenfahrzeugs und damit die Abnahme der Aufstandskraft $F_A$ eines Rades 2 gegenüber der Schiene 3 infolge einer betriebsbedingten Entlastung aufgrund z. B. der Einwirkung einer äußeren Kraft auf das Schienenfahrzeug veranschaulicht. Dabei zeigt die linke Figurenhälfte der FIG 8 die bei gegebener Fahrzeugmasse resultierende maximale Normalkraft $F_N$ und die daraus folgende Aufstandskraft $F_A$, während die rechte Figurenhälfte deren Abnahme um die Entlastung $F_E$ zeigt. Die Erfassung der Entlastung oder Entlastungskraft $F_E$ erfolgt durch eine Kraftmessung, wozu ein Dehnungsmeßstreifen 26 am Rad 2 angebracht ist. In Abhängigkeit von der mittels des Dehnungsstreifens 26 erfassten Entlastung $F_E$ dieses Rades 2 gegenüber der diesem zugeordneten Schiene 3 wird die magnetische Kraft $F_M$ des Wanderfeldes eingestellt, d. h. mehr oder weniger erhöht. Dazu erhält die Steuereinrichtung 13 ein aus dieser Kraftmessung abgeleitetes Steuersignal als Steuerparameter $P_E$. Mittels des Dehnungsmessstreifens 26 wird dabei die Abnahme der Normalkraft $F_N$ gemäß der Beziehung $F_G = F_N + F_E$ bestimmt, wobei $F_G$ der Gewichtskraft des Schienenfahrzeugs in dessen Ruheposition ohne Einwirkung äußerer Kräfte und damit der maximalen Normalkraft entspricht.

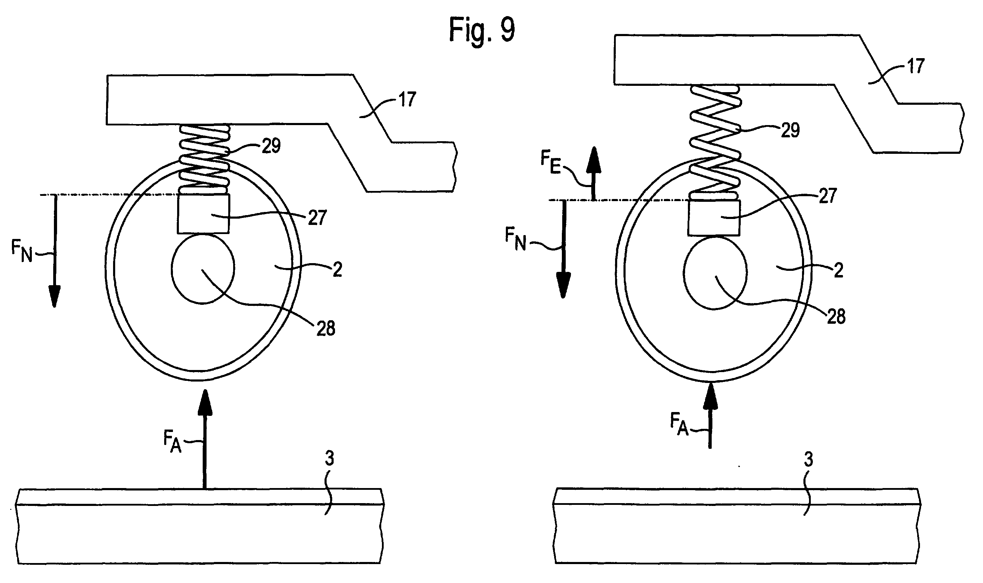

FIG 9 zeigt analog zu FIG 8 die Änderung der Normalkraft $F_N$ und die daraus resultierende Abnahme der Auf standskraft $F_A$ bei Auftreten einer betriebsbedingten Entlastung $F_E$. Auch hier erfolgt eine Kraftmessung und in Abhängigkeit davon eine Einstellung der magnetischen Kraft $F_M$ des Wanderfeldes mittels der Steuereinrichtung anhand des aus der Kraftmessung abgeleiteten Steuerparameters $P_E$. Die Kraftmessung erfolgt hier mittels einer Kraftmessdose 27, die zwischen einem Radoder Achslager 28 und einer zwischen diesem und dem Drehgestell oder Drehgestellrahmen 17 vorgesehenen Primärfeder 29 angeordnet ist. Mittels der Kraftmessdose 27 wird dabei ebenfalls die Abnahme der Normalkraft $F_N$ gemäß der Beziehung $F_G = F_N + F_E$ bestimmt.

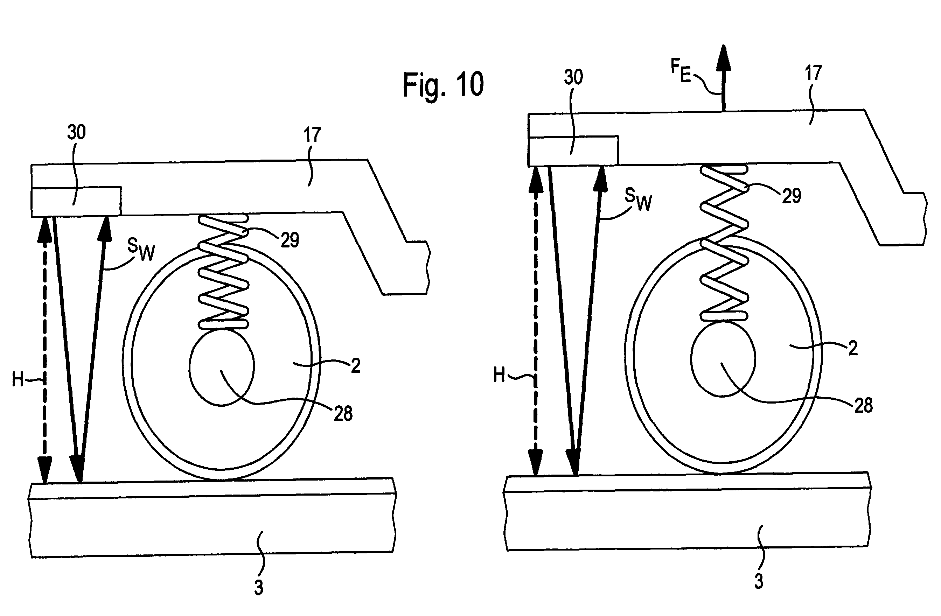

Gemäß FIG 10 kann die Entlaseungserfassung auch durch eine Wegmessung erfolgen. Hierzu ist eine Wegmesseinrichtung 30 am Drehgestellrahmen 17 angeordnet, die mittels eines optischen oder akustischen Signals $S_W$ den Abstand oder die Höhe H zwischen dem Drehgestellrahmen 17 und der Schiene 3 erfasst. Aus einer durch eine Entlastung $F_E$ bedingten Änderung $\Delta H$ der Höhe H, die durch eine Lauf zeitänderung oder einen Laufzeitunterschied des optischen bzw. akustischen Signals $S_W$ erfasst wird, wird mittels der Steuereinrichtung 13 anhand des aus dieser Wegmessung abgeleiteten Steuerparameters $P_E$ analog die magnetische Kraft $F_M$ des Wanderfeldes eingestellt. Die Abstand- oder Höhenänderung $\Delta H$ ist dabei gemäß der Beziehung:

$$\Delta H = F_E / C_f$$

proportional zur Entlastung oder Entlastungskraft $F_E$, wobei $C_f$ die Federkonstante der Primärfeder 29 ist.

Die Wegmessung zur Erfassung der betriebsbedingten Abnahme der Normalkraft $\Delta F_N$ und damit der Entlastung $F_E$ kann auch indirekt über eine Kraftmessung erfolgen. So kann aus einer Messung der Wagenkastenbeschleunigung gemäß der Beziehung $\Delta F_N = F_E \propto a$ oder von auf das Schienenfahrzeug wirkenden Gieroder Rollmomenten gemäß der Beziehung $M \propto \omega \propto \Delta F_N = F_E$ (Hebelgesetzt) oder einer Druckmessung gemäß der Beziehung $\Delta F_N = F_E \propto p$ einerseits die Kraft direkt erfasst und andererseits aus einer Wegmessung durch entsprechende Differenziation auf die Entlastung $F_E$ zurückgerechnet werden. Dabei sind die Proportionalitätsfaktoren einerseits und die maximale Normalkraft $F_G$ des Schienenfahrzeugs bekannt, so dass aus einer gemessenen Kraft- oder Wegänderung die Entlastung $F_E$ bestimmt und als Steuerparameter $P_E$ der Steuereinrichtung 13 vorgegeben werden kann. Diese stellt dann in Abhängigkeit von der meßtechnisch erfassten Entlastung $F_E$ die dieser entgegengesetzt gleiche magnetische Kraft $F_M$ ein.

**Patentansprüche**

1. Verfahren zur Erhöhung der zwischen einem Schienenfahrzeug und der Schiene (3) wirkenden Normalkraft ($F_N$), bei dem in einem Luftspalt (19) zwischen einem vom Schienenfahrzeug mitbewegten Magnetsystem (1) und der Schiene (3) ein magnetisches Wanderfeld erzeugt wird,
   **dadurch gekennzeichnet,** dass eine der Fahrzeuggeschwindigkeit ($v_F$) entgegengesetzt gleiche Wanderfeldgeschwindigkeit ($v_W$) erzeugt wird, wobei die vom Wanderfeld erzeugte magnetische Kraft ($F_M$) in Abhängigkeit von einer meßtechnisch erfassten Entlastung ($F_E$) eines Fahrzeugrades (2) gegenüber der diesem zugeordneten Schiene (3) eingestellt wird.

2. Verfahren nach Anspruch 1,
   **dadurch gekennzeichnet,** dass die Entlastung ($F_E$) des Fahrzeugrades (2) gegenüber der Schiene (3) durch eine Kraft- und/oder Wegmessung erfasst wird.

3. Verfahren nach Anspruch 1 oder 2,
   **dadurch gekennzeichnet,** dass die vom Wanderfeld erzeugte magnetische Kraft ($F_M$) derart eingestellt wird, dass die meßtechnisch erfasste Entlastung ($F_E$) kompensiert wird.

4. Vorrichtung zur Erhöhung der zwischen einem Schienenfahrzeug und der Schiene (3) wirkenden Normalkraft ($F_N$), mit einem vom Fahrzeug mitbewegten steuerbaren Magnetsystem (1), das in einem Luftspalt (19) zwischen dem Fahrzeug und der Schiene (3) ein magnetisches Wanderfeld erzeugt,
   **gekennzeichnet durch** eine mit dem Magnetsystem (1) verbundene Steuereinrichtung (13), der eingangsseitig die erfasste Fahrzeuggeschwindigkeit ($v_F$) zur Einstellung einer dieser entgegengerichtet gleichen Wanderfeldgeschwindigkeit ($v_W$) und mindestens ein die Entlastung ($F_E$) eines Fahrzeugrades (2) gegenüber der diesem zugeordneten Schiene (3) repräsentierender Steuerparameter ($P_n$) zur Einstellung der vom Wanderfeld erzeugten magnetischen Kraft ($F_M$) zugeführt ist.

5. Vorrichtung nach Anspruch 4,
   **dadurch gekennzeichnet,** dass das steuerbare Magnetsystem (1) einen Linearmotor (4) mit einer Anzahl von einzeln erregbaren Elektromagneten umfaßt, deren Spulen (5) von mindestens einem eingangsseitig mit der Steuereinrichtung (13) verbundenen Umrichter (8) gespeist sind.

6. Vorrichtung nach Anspruch 5, **gekennzeichnet durch** einen mehrphasigen Umrichter (8), dessen jeweiliger Phasenausgang (7a bis 7c) mit einer dieser Phase (L1,L2,L3) zugeordneten Spule (5) verbunden ist.

7. Vorrichtung nach Anspruch 5 oder 6, **dadurch gekennzeichnet,** dass mehrere Spulengruppen (15a bis 15c, 16a bis 16c) mit jeweils einer der Anzahl der Phasen (L1,L2,L3) entsprechenden Anzahl von Spulen (5) vorgesehen sind, wobei die den einzelnen Phasen (L1,L2,L3) zugeordneten Spulen (5) der Spulengruppen (15a bis 15c, 16a bis 16c) miteinander verbunden sind.

8. Vorrichtung nach einem der Ansprüche 4 bis 7, **dadurch gekennzeichnet,** dass im Bereich mehrerer Radanordnungen (2) des Schienenfahrzeugs jeweils mindestens eine mit diesem fest verbundene steuerbare Magnetanordnung (1) vorgesehen ist, deren auf ein Reaktionselement (3,3') wirkende magnetische Kraft ($F_M$) individuell einstellbar ist.

9. Vorrichtung nach einem der Ansprüche 4 bis 8, **dadurch gekennzeichnet,** dass bei der Ausführung des Schienenfahrzeugs für ein Zwei-Schienen-System mit jeweils mindestens einen Radsatz (2) aufweisendem Drehgestell (17) beidseitig des Drehgestells (17) eine mehrphasige Spulenanordnung (15,16) vorgesehen ist, deren Spulen (5) unter Bildung des Luftspaltes (19) zwischen diesen und der jeweiligen Schiene (3) an einem am Drehgestell (17) befestigten Tragsystem (18) gehalten sind.

10. Vorrichtung nach einem der Ansprüche 4 bis 8, **dadurch gekennzeichnet,** dass ein jeweils mindestens einen Radsatz (2) aufweisendes Drehgestell (17') etwa in dessen Mitte eine mehrphasige Spulenanordnung (15') aufweist, deren spulen (5) unter Bildung des Luftspaltes (19) zwischen diesen und einem mittig zwischen den Schienen (3) angeordneten Reaktionselement (3') an einem am Drehgestell (17') befestigten Tragsystem (18) gehalten sind.

Fig. 1

EP 1 048 542 A2

11

15a    15b    15c

15

14

8

L2   L1

L3

16

16a    16b    16c

Fig. 2

2    18    15    2

3

17

3

2    2

18    16

2    2

18    16

Fig. 3

Fig. 4

Fig. 5

Fig. 6

EP 1 048 542 A2

Fig. 7

Fig. 8

# Fig. 9

EP 1 048 542 A2

Fig. 10

EP 1 048 542 A2